(19) Europäisches Patentamt
European Patent Office
Office européen des brevets

(11) **EP 2 256 692 B1**

(12) **EUROPEAN PATENT SPECIFICATION**

(45) Date of publication and mention
of the grant of the patent:
**04.01.2012 Bulletin 2012/01**

(51) Int Cl.:
**G06T 11/20** (2006.01)

(21) Application number: **10161928.6**

(22) Date of filing: **04.05.2010**

(54) **Method and system for approximating a curve for display purposes, and graphic display control method and apparatus**

Verfahren und System zur Annäherung einer Kurve für Anzeigezwecke und grafisches Anzeigesteuerungsverfahren und Vorrichtung

Procédé et système d'approximation d'une courbe pour les besoins d'affichage, et procédé et appareil de contrôle d'affichage graphique

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **25.05.2009 CN 200910142113**

(43) Date of publication of application:
**01.12.2010 Bulletin 2010/48**

(73) Proprietor: **FUJITSU LIMITED**
**Kawasaki-shi,**
**Kanagawa 211-8588 (JP)**

(72) Inventors:
• **Zhiming, Tan**
**Shanghai (CN)**
• **Xianghui, Bai**
**Shanghai (CN)**
• **Sugama, Yasushi**
**Nakahara-ku, Kanagawa 211-8588 (JP)**

(74) Representative: **Wilding, Frances Ward**
**Haseltine Lake LLP**
**Lincoln House, 5th Floor**
**300 High Holborn**
**London WC1V 7JH (GB)**

(56) References cited:
**EP-A2- 0 577 131      US-A- 5 408 598**
**US-A- 6 069 554**

• MACVICAR D ET AL: "Bezier curve rendering on Virtex<TM>" FIELD-PROGRAMMABLE CUSTOM COMPUTING MACHINES, 1999. FCCM '99. PROCEEDI NGS. SEVENTH ANNUAL IEEE SYMPOSIUM ON NAPA VALLEY, CA, USA 21-23 APRIL 1999, LOS ALAMITOS, CA, USA,IEEE COMPUT. SOC, US LNKD- DOI:10.1109/FPGA. 1999.803712, 21 April 1999 (1999-04-21), pages 314-315, XP010359158 ISBN: 978-0-7695-0375-2
• RAPPOPORT A: "RENDERING CURVES AND SURFACES WITH HYBRID SUBDIVISION AND FORWARD DIFFERENCING" ACM TRANSACTIONS ON GRAPHICS, ACM, US LNKD-DOI:10.1145/116913.116914, vol. 10, no. 4, 1 October 1991 (1991-10-01), pages 323-341, XP000248359 ISSN: 0730-0301

**Description**

<u>Technical Field</u>

The invention relates to graphic processing, and particularly relates to a method and apparatus for approximating a curve and a graphic display control method and apparatus. The method and apparatus are suitable to aid rendering characters or other curved symbols or pictures, for example to convert a character consisting of one or more mathematically defined curves into a format more suitable for display using a pixel array.

<u>Background</u>

In computer graphics applications, rendering characters is an important branch. Two-dimensional characters are generally formed by quadratic Bezier curves, cubic Bezier curves, and elliptical curves etc., in a two-dimensional plane.

It is inefficient, for a Graphics Display Controller (GDC) chip, to render curves pixel by pixel by tracking along the curves. With appropriate precision, it is reasonable to approximate a curve with straight lines. It is a tradeoff between precision and speed. For many applications of GDC chips, speed overwhelms precision, such as car navigation, mobile phone, and amusement displayer.

Approximating a curve with straight lines needs to firstly subdivide the curve with subdividing points, then calculate coordinates of the subdividing points, and finally connect adjacent subdividing points via straight lines. It is a long existing problem to approximate a curve. There exist many solutions to approximate Bezier curves, such as direct method, recursive subdivision, forward differencing, and hybrid method. However, these methods are not fast enough.

As Bezier curves are commonly represented by polynomials of parameter $t$ (for example, $x(t)=a \cdot t^2+b \cdot t+c$, $y(t)=d \cdot t^2+e \cdot t+f$ for quadratic Bezier curve, where the coefficients $a$, $b$, $c$, $d$, $e$, and $f$ can be calculated by control points of the quadratic Bezier curve), the coordinate values of each subdividing point can be calculated directly, given the parameter $t$ at each subdividing point. Although this method is simple and direct, it needs too many multiplications for each subdividing point.

Recursive subdivision is a recursive procedure, to find step by step subdividing points by calculating the middle points on each edge of a control polygon. Connecting adjacent subdividing points will form straight lines. Setting an appropriate threshold of flatness, the straight lines will approximate a curve with reasonable precision. However, the recursive procedure and calculating flatness will take a large amount of time.

Forward differencing is suitable for Bezier curves. The coordinate values of a next subdividing point can be got by adding the coordinate values of a previous subdividing point with difference values. With a fixed step, the coordinate values of each subdividing point can be calculated by just several addition operations. Therefore, the speed is very high. However, the number of the subdividing points (i.e. the step) needs to be determined before calculating the coordinates.

The hybrid method combines recursive subdivision and forward differencing together. It first uses recursive subdivision and flatness to obtains the parameter of each subdividing point, and then uses forward differencing to calculate the coordinate values of each subdividing point. This method is complex for implementation.

Therefore, a method and/or apparatus for approximating a curve, used in curve rendering and more efficient than the abovementioned methods for a graphic display control, are needed.

Document EP0577131A2 discloses high speed and memory efficient system and method for rendering Bézier curves. The system utilizes a hybrid forward differencing function representing the Bézier curve defined by the Bézier control points and renders the curve with a small number of straight line segments. The system renders the curve in a manner that results in the same Bézier control points that are calculated using the prior art recursive subdivision techniques and rejects line segment approximations that would not be derived from recursive subdivision. The system can start at either end of a Bézier curve and will render the same approximation. The method is readily implemented on a computer and is applicable to Bézier curves of any order.

US 6069554 discloses a rendering device for converting input information into a bit map including a Bezier subdivision processor responsive to Bezier curve information describing a Bezier curve of an image. The Bezier subdivision processor performs at least one subdivision on the Bezier curve if the Bezier curve is greater than a desired resolution of a bit map to produce subdivided Bezier curves until all subdivided Bezier curves are at about the resolution of the bit map. The Bezier subdivision processor produces cross information from each Bezier curve which makes one crossing of a grid having the resolution of the bit map. The rendering device also includes a digital processor responsive to the cross information and operative to produce a bit map of the image from the cross information. A method for producing cross positions of Bezier curves with a grid of the present invention includes receiving a Bezier curve, sequentially subdividing the Bezier curve into a plurality of subdivided Bezier curves until each Bezier curve crosses less than a plurality of times with cell boundaries of a grid of a desired resolution, and developing the Cartesian coordinates and direction of each of the crosses of a Bezier curve with a boundary.

US 5408598 discloses a method which enables the prediction of the number of subdivisions of a curve that will be required by control polygons to assure that a resulting straight line representation of the curve will not exceed a preset error threshold. The method is applicable to cubics and parametric quadratics including parabolas, ellipses and hyperbolas. In each case, the prediction of the number of subdivisions eliminates the need for a detailed error calculation at each subdivision step, thereby enabling an error calculation to be carried out only once in the process.

Summary of The Invention

In view of one or more of the above problems, this invention proposes a method and apparatus for approximating a curve and a graphic-display control method and apparatus.

The invention is defined in the independent claims, to which reference should now be made. Advantageous developments are defined in the sub-claims.

One method for approximating a curve according to embodiments of an aspect of the invention comprises the steps of: acquiring number information of subdividing points for subdividing a curve needed to be approximated based on coordinate information of control points of the curve by: acquiring a curve function of the curve based on the coordinate information of the control points; acquiring a relationship between an area difference and a subdividing step based on the curve function, wherein the area difference is the difference between the area of a curve segment corresponding to the subdividing step on the curve with respect to X coordinate axis and the area of a line segment of two points corresponding to the subdividing step on the curve with respect to X coordinate axis; acquiring a subdividing step corresponding to a set area difference based on the relationship between the area difference and the subdividing step; and acquiring the number information of the subdividing points using the subdividing step corresponding to the set area difference; acquiring coordinate information of the subdividing points based on the number information of the subdividing points and the coordinate information of the control points; and connecting the subdividing points with straight lines based on the coordinate information of the subdividing points.

An apparatus for approximating a curve according to embodiments of another aspect of the invention, comprises: a number acquiring unit configured to acquire number information of (the number of) subdividing points for subdividing a curve needed to be approximated based on coordinate information of control points of the curve, the number acquiring unit comprising: a curve function acquiring unit configured to acquire a curve function of the curve based on the coordinate information of the control points; a mutual relationship acquiring unit configured to acquire a relationship between an area difference and a subdividing step based on the curve function, wherein the area difference is the difference between the area of a curve segment corresponding to the subdividing step on the curve with respect to X coordinate axis and the area of a line segment of two points corresponding to the subdividing step on the curve with respect to X coordinate axis; a subdividing step acquiring unit configured to acquire a subdividing step corresponding to a set area difference based on the relationship between the area difference and the subdividing step; and a number information acquiring unit configured to acquire the number information of the subdividing points using the subdividing step corresponding to the set area difference; a coordinate acquiring unit configured to acquire coordinate information of (coordinates of) the subdividing points based on the number information of the subdividing points and the coordinate information of the control points; and a curve approximating unit configured to connect the subdividing points with straight lines based on the coordinate information of the subdividing points.

The features enumerated for different aspects may be combined.

Brief Description of The Drawings

The invention can be easily understood from the following description of the preferred embodiments of this invention in conjunction with the drawings, in which

Figure 1 illustrates schematic diagrams of a quadratic Bezier curve, a cubic Bezier curve and an elliptical curve;
Figure 2 illustrates schematic diagram of a relationship between an area difference and a subdividing step, wherein the area difference is the difference between the area of a curve segment corresponding to the subdividing step with respect to X coordinate axis and the area of a line segment of two points corresponding to the subdividing step on the curve with respect to X coordinate axis;
Figure 3 illustrates a conceptual schematic diagram of forward differencing for approximating a Bezier curve;
Figure 4 illustrates a schematic diagram of the procedure for affine transforming a unit circle to acquire an ellipse;
Figure 5 illustrates a block diagram of a graphic-display control apparatus according to an embodiment of the invention;
Figure 6 illustrates a detailed block diagram of a subdivision module shown in figure 5; and
Figure 7 illustrates a detailed block diagram of a coordinate calculation module shown in figure 5.

Descriptions of The Preferred Embodiments

Features in respective aspects and exemplary embodiments of the invention will be described in detail below. In the following detailed description, a number of specific details are proposed to provide thorough understanding of the invention.

However, it is obvious to those skilled in the art that the invention can be implemented without some of the specific details. The following descriptions of the embodiments are merely to provide better understanding of the invention by illustrating examples of the invention. The invention is not limited to any specific configuration and algorithm mentioned below, and covers any modification, substitution and improvement of the elements, components and algorithms without departing from the spirit of the invention. In the figures and the following description, well-known structures and techniques are not disclosed to avoid unnecessarily obscuring the invention.

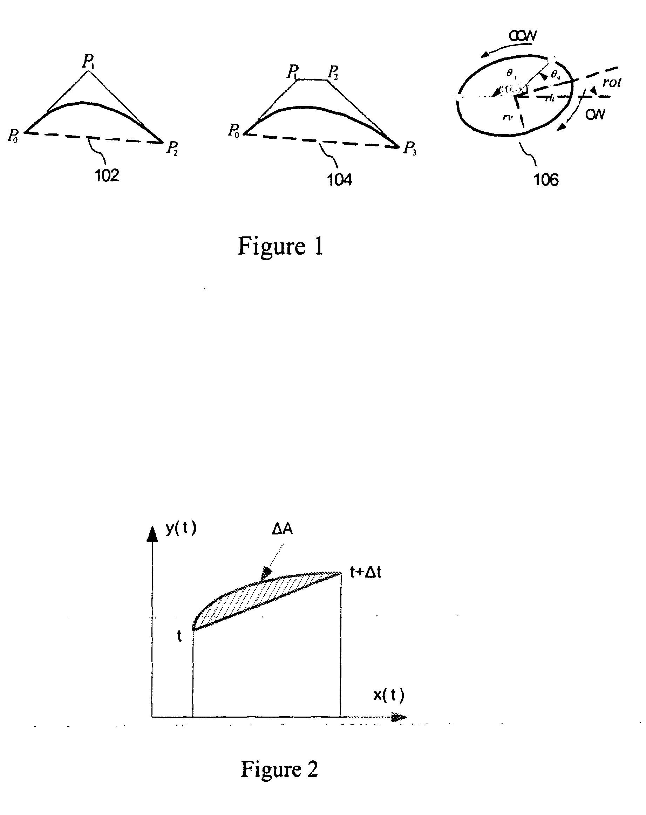

Figure 1 illustrates diagrams of a quadratic Bezier curve, a cubic Bezier curve and an elliptical curve. As shown in figure 1, the quadratic Bezier curve 102 has three control points: $P_0(x_0, y_0)$, $P_1(x_1,y_1)$ and $P_2(x_2,y_2)$; the cubic Bezier curve 104 has four control points: $P_0(x_0, y_0)$, $P_1(x_1,y_1)$ $P_2(x_2,y_2)$ and $P_3(x_3,y_3)$. These control points constitute a control polygon for each curve respectively. The elliptical curve 106 has a horizontal radius $rh$, a vertical radius $rv$, a starting angle $\theta_0$, a terminating angle $\theta_1$, a center point $P_c(x_c,y_c)$, a rotation angle $rot$ and a symbol indicating whether the elliptical curve rotates counterclockwise (CCW) or clockwise (CW).

The parametrical equation of the quadratic Bezier curve is

$$x(t) = (1-t)^2 x_0 + 2t(1-t)x_1 + t^2 x_2$$
$$y(t) = (1-t)^2 y_0 + 2t(1-t)y_1 + t^2 y_2 , \qquad (1)$$

where $0 \le t \le 1$. The parametrical equation of the quadratic Bezier curve can be set as another form:

$$x(t) = a_{qx}t^2 + b_{qx}t + c_{qx}$$
$$y(t) = a_{qy}t^2 + b_{qy}t + c_{qy} , \qquad (2)$$

where $a_{qs} = x_2 - 2x_1 + x_0$, $b_{qx} = 2(x_1 - x_0)$, $c_{qx} = x_0$, $a_{qy} = y_2 - 2y_1 + y_0$, $b_{qy}=2(y_1-y_0)$, and $c_{qy}=y_0$.

The parametrical equation of the cubic Bezier curve is

$$x(t) = (1-t)^3 x_0 + 3t(1-t)^2 x_1 + 3t^2(1-t)x_2 + t^3 x_3$$
$$y(t) = (1-t)^3 y_0 + 3t(1-t)^2 y_1 + 3t^2(1-t)y_2 + t^3 y_3 , \qquad (3)$$

where $0 \le t \le 1$. The parametrical equations of the cubic Bezier curve can also be set as another form:

$$x(t) = a_{cx}t^3 + b_{cx}t^2 + c_{cx}t + d_{cx}$$
$$y(t) = a_{cy}t^3 + b_{cy}t^2 + c_{cy}t + d_{cy} , \qquad (4)$$

wherein $a_{cx} = x_3 - 3x_2 + 3x_1 - x_0$, $b_{cx} = 3x_2 - 6x_1 + 3x_0$, $c_{cx} = 3x_1 - 3x_0$, $d_{cx} = x_0$, $a_{cy} = y_3 - 3y_2 + 3y_1 - y_0$, $b_{cy} = 3_{y2} - 6y_1 + 3y_0$, $c_{cy} = 3y_1 - 3y_0$ and $d_{cy} = y_0$.

The parametrical equation of the elliptical curve is

$$\begin{bmatrix} x \\ y \\ 1 \end{bmatrix} = \begin{bmatrix} rh \cdot \cos(rot) & -rv \cdot \sin(rot) & x_c \\ rh \cdot \sin(rot) & rv \cdot \cos(rot) & y_c \\ 0 & 0 & 1 \end{bmatrix} \begin{bmatrix} \cos\theta \\ \sin\theta \\ 1 \end{bmatrix}, \qquad (5)$$

where $\theta$ is the parameter of any point on the elliptical curve, and *rot* is the rotation angle of the elliptical curve relative to the coordinate system. The elliptical curve can be regarded as a result of affine transforming a unit circle ($\cos\theta$, $\sin\theta$).

Figure 2 illustrates a schematic diagram of a relationship between an area difference and a subdividing step, wherein the area difference is the difference between the area of a curve segment corresponding to the subdividing step with respect to X coordinate axis and the area of a line segment of two points corresponding to the subdividing step on the curve with respect to X coordinate axis.

The area difference $\Delta A$ between the area of a curve segment corresponding to a subdividing step $\Delta t$ with respect to X coordinate axis and the area of a line segment between two points corresponding to the subdividing step on the curve with respect to X coordinate axis can be obtained by the following expression:

$$\Delta A = A - A_a, \qquad (6)$$

where $A$ is the area of the curve segment corresponding to $\Delta t$ with respect to X coordinate axis, and $A_a$ is the area of the line segment between two end points on the curve segment with respect to X coordinate axis.

If the curve segment is part of the quadratic Bezier curve, then there exist the following equations

$$\begin{aligned} A &= \int_t^{t+\Delta t} y(t) dx(t) \\ &= \int_t^{t+\Delta t} \left( a_{qy} t^2 + b_{qy} t + c_{qy} \right) \left( 2a_{qx} t + b_{qx} \right) dt \\ &= \frac{a_{qx} a_{qy}}{2} \Delta t^4 + \left( 2a_{qx} a_{qy} t + \frac{a_{qy} b_{qx} + 2a_{qx} b_{qy}}{3} \right) \Delta t^3 + \\ &\quad \left( 3a_{qx} a_{qy} t^2 + \left( a_{qy} b_{qx} + 2a_{qx} b_{qy} \right) t + \frac{b_{qx} b_{qy} + 2a_{qx} c_{qy}}{2} \right) \Delta t^2 + \\ &\quad \left( 2a_{qx} a_{qy} t^3 + \left( a_{qy} b_{qx} + 2a_{qx} b_{qy} \right) t^2 + \left( b_{qx} b_{qy} + 2a_{qx} c_{qy} \right) t + b_{qx} c_{qy} \right) \Delta t \end{aligned} \qquad (7)$$

and

$$A_a = \frac{\left(y(t) + y(t + \Delta t)\right) \cdot \left(x(t + \Delta t) - x(t)\right)}{2}$$

$$= \frac{1}{2}\left(a_{qy}t^2 + b_{qy}t + c_{qy} + a_{qy}(t + \Delta t)^2 + b_{qy}(t + \Delta t) + c_{qy}\right) \cdot$$

$$\left(a_{qx}\left(\Delta t^2 + 2t \cdot \Delta t\right) + b_{qx}\Delta t\right)$$

$$= \frac{a_{qx}a_{qy}}{2}\Delta t^4 + \left(2a_{qx}a_{qy}t + \frac{a_{qy}b_{qx} + a_{qx}b_{qy}}{2}\right)\Delta t^3 + \qquad (8)$$

$$\left(3a_{qx}a_{qy}t^2 + \left(a_{qy}b_{qx} + 2a_{qx}b_{qy}\right)t + \frac{b_{qx}b_{qy} + 2a_{qx}c_{qy}}{2}\right)\Delta t^2 +$$

$$\left(2a_{qx}a_{qy}t^3 + \left(a_{qy}b_{qx} + 2a_{qx}b_{qy}\right)t^2 + \left(b_{qx}b_{qy} + 2a_{qx}c_{qy}\right)t + b_{qx}c_{qy}\right)\Delta t$$

Therefore, the area difference between the area of the curve segment corresponding to $\Delta t$ with respect to X coordinate axis and the area of the line segment between the two points on the curve segment corresponding to the subdividing step with respect to X coordinate axis is

$$\Delta A = A - A_a$$

$$= \left(\frac{a_{qy}b_{qx} + 2a_{qx}b_{qy}}{3} - \frac{a_{qy}b_{qx} + a_{qx}b_{qy}}{2}\right)\Delta t^3$$

$$= \frac{a_{qx}b_{qy} - a_{qy}b_{qx}}{6}\Delta t^3 \qquad\qquad (9)$$

$$= Q \cdot \Delta t^3$$

As can be seen from the above expression, the area difference has no relationship with the parameter $t$, but with $\Delta t$. If $\Delta A$ is set to a threshold $T$, (5 pixels, for example), $\Delta t$ can be obtained by the following expression:

$$\Delta t = \sqrt[3]{\frac{T}{Q}} \qquad . \qquad\qquad (10)$$

If the curve segment is part of the cubic Bezier curve, then there exist the following equations:

$$A = \int_{t}^{t+\Delta t} y(t)dx(t)$$

$$= \int_{t}^{t+\Delta t} \left(a_{cy}t^3 + b_{cy}t^2 + c_{cy}t + d_{cy}\right)\left(3a_{cx}t^2 + 2b_{cx}t + c_{cx}\right)dt$$

$$= \frac{a_{cx}a_{cy}}{2}\Delta t^6 + \left(3a_{cx}a_{cy}t + \frac{3a_{cx}b_{cy} + 2a_{cy}b_{cx}}{5}\right)\Delta t^5 +$$

$$\left(\frac{15a_{cx}a_{cy}}{2}t^2 + \left(2a_{cy}b_{cx} + 3a_{cx}b_{cy}\right)t + \frac{a_{cy}c_{cx} + 2b_{cx}b_{cy} + 3a_{cx}c_{cy}}{4}\right)\Delta t^4 +$$

$$\left(\begin{array}{l}10a_{cx}a_{cy}t^3 + \left(4a_{cy}b_{cx} + 6a_{cx}b_{cy}\right)t^2 + \left(a_{cy}c_{cx} + 2b_{cx}b_{cy} + 3a_{cx}c_{cy}\right)t + \\ \dfrac{b_{cy}c_{cx} + 2b_{cx}c_{cy} + 3a_{cx}d_{cy}}{3}\end{array}\right)\Delta t^3 +$$

$$\left(\begin{array}{l}\dfrac{15a_{cx}a_{cy}}{2}t^4 + \left(4a_{cy}b_{cx} + 6a_{cx}b_{cy}\right)t^3 + \dfrac{3a_{cy}c_{cx} + 6b_{cx}b_{cy} + 9a_{cx}c_{cy}}{2}t^2 \\ + \left(b_{cy}c_{cx} + 2b_{cx}c_{cy} + 3a_{cx}d_{cy}\right)t + \dfrac{c_{cx}c_{cy} + 2b_{cx}d_{cy}}{2}\end{array}\right)\Delta t^2 + \qquad (11)$$

$$\left(\begin{array}{l}3a_{cx}a_{cy}t^5 + \left(2a_{cy}b_{cx} + 3a_{cx}b_{cy}\right)t^4 + \left(a_{cy}c_{cx} + 2b_{cx}b_{cy} + 3a_{cx}c_{cy}\right)t^3 \\ + \left(b_{cy}c_{cx} + 2b_{cx}c_{cy} + 3a_{cx}d_{cy}\right)t^2 + \left(c_{cx}c_{cy} + 2b_{cx}d_{cy}\right)t + c_{cx}d_{cy}\end{array}\right)\Delta t$$

and

$$A_a = \frac{(y(t) + y(t + \Delta t)) \cdot (x(t + \Delta t) - x(t))}{2}$$

$$= \frac{1}{2}\left(a_{cy}t^3 + b_{cy}t^2 + c_{cy}t + d_{cy} + a_{cy}(t + \Delta t)^3 + b_{cy}(t + \Delta t)^2 + c_{cy}(t + \Delta t) + d_{cy}\right) \cdot$$

$$\left(a_{cx}(\Delta t^3 + 3t \cdot \Delta t^2 + 3t^2 \cdot \Delta t) + b_{cx}(\Delta t^2 + 2t \cdot \Delta t) + c_{cx}\Delta t\right)$$

$$= \frac{a_{cx}a_{cy}}{2}\Delta t^6 + \left(3a_{cx}a_{cy}t + \frac{a_{cx}b_{cy} + a_{cy}b_{cx}}{2}\right)\Delta t^5 +$$

$$\left(\frac{15a_{cx}a_{cy}}{2}t^2 + \frac{5a_{cy}b_{cx} + 5a_{cx}b_{cy}}{2}t + \frac{a_{cy}c_{cx} + b_{cx}b_{cy} + a_{cx}c_{cy}}{2}\right)\Delta t^4 +$$

$$\left(\begin{array}{l} 10a_{cx}a_{cy}t^3 + \dfrac{9a_{cy}b_{cx} + 11a_{cx}b_{cy}}{2}t^2 + \dfrac{5a_{cx}c_{cy} + 4b_{cx}b_{cy} + 3a_{cy}c_{cx}}{2}t + \\[2mm] \dfrac{b_{cy}c_{cx} + b_{cx}c_{cy} + 2a_{cx}d_{cy}}{2} \end{array}\right)\Delta t^3 +$$

$$\left(\begin{array}{l} \dfrac{15a_{cx}a_{cy}}{2}t^4 + \left(4a_{cy}b_{cx} + 6a_{cx}b_{cy}\right)t^3 + \dfrac{3a_{cy}c_{cx} + 6b_{cx}b_{cy} + 9a_{cx}c_{cy}}{2}t^2 + \\[2mm] \left(b_{cy}c_{cx} + 2b_{cx}c_{cy} + 3a_{cx}d_{cy}\right)t + \dfrac{c_{cx}c_{cy} + 2b_{cx}d_{cy}}{2} \end{array}\right)\Delta t^2 +$$

$$\left(\begin{array}{l} 3a_{cx}a_{cy}t^5 + \left(2a_{cy}b_{cx} + 3a_{cx}b_{cy}\right)t^4 + \left(a_{cy}c_{cx} + 2b_{cx}b_{cy} + 3a_{cx}c_{cy}\right)t^3 + \\[2mm] \left(b_{cy}c_{cx} + 2b_{cx}c_{cy} + 3a_{cx}d_{cy}\right)t^2 + \left(c_{cx}c_{cy} + 2b_{cx}d_{cy}\right)t + c_{cx}d_{cy} \end{array}\right)\Delta t$$

$$(12)$$

Then,

$$\Delta A = A - A_a$$

$$= \left(\frac{a_{cx}b_{cy} - a_{cy}b_{cx}}{10}\right)\Delta t^5 + \left(\frac{a_{cx}b_{cy} - a_{cy}b_{cx}}{2}t + \frac{a_{cx}c_{cy} - a_{cy}c_{cx}}{4}\right)\Delta t^4 + \qquad (13)$$

$$\left(\frac{a_{cx}b_{cy} - a_{cy}b_{cx}}{2}t^2 + \frac{a_{cx}c_{cy} - a_{cy}c_{cx}}{2}t + \frac{b_{cx}c_{cy} - b_{cy}c_{cx}}{6}\right)\Delta t^3$$

As $\Delta t$ is between (01] under general conditions, two items $\Delta t^5$ 和 $\Delta t^4$ can be omitted, then the above mentioned equation (13) becomes

$$\Delta A \approx \left(\frac{a_{cx}b_{cy} - a_{cy}b_{cx}}{2}t^2 + \frac{a_{cx}c_{cy} - a_{cy}c_{cx}}{2}t + \frac{b_{cx}c_{cy} - b_{cy}c_{cx}}{6}\right)\Delta t^3 . \qquad (14)$$

$$= C(t) \cdot \Delta t^3$$

If the maximum value of $C(t) = \dfrac{a_{cx}b_{cy} - a_{cy}b_{cx}}{2}t^2 + \dfrac{a_{cx}c_{cy} - a_{cy}c_{cx}}{2}t + \dfrac{b_{cx}c_{cy} - b_{cy}c_{cx}}{6} = L \cdot t^2 + M \cdot t + N$ can

be obtained, then the abovementioned equation (14) will be

$$\Delta A \approx C_{max} \cdot \Delta t^3 \qquad (15)$$

As in general cases, the scope of $t$ is [0.0,1.0], to find the maximum value of $C(t)$ is to find the maximum value of among $t = 0.0$, $t = 1.0$ and $t = -\dfrac{M}{2L}$. These three values are

$$val_{t=0} = \frac{b_x c_y - b_y c_x}{6}$$

$$val_{t=1} = \frac{a_x b_y - a_y b_x}{2} + \frac{a_x c_y - a_y c_x}{2} + \frac{b_x c_y - b_y c_x}{6} \qquad (16)$$

$$val_{t=-M/(2L)} = -\frac{M^2}{4L} + N$$

Therefore,

$$C_{max} = \max\left(val_{t=0}, val_{t=1}, val_{t=-M/(2L)}\right) \qquad (17)$$

Finally, if $\Delta A$ is set to a threshold $T$(5 pixels, for example), then the following expression will be gotten:

$$\Delta t = \sqrt[3]{\frac{T}{C_{max}}} \qquad (18)$$

If the curve segment is part of the elliptical curve, which is centered at the original point of the coordinate system, and has no rotation relative to X coordinate axis, then there exist the following equations:

$$
\begin{aligned}
A &= \int_t^{t+\Delta t} y(t)\,dx(t) \\
&= \int_t^{t+\Delta t} (rv\sin t)(-rh\sin t)\,dt \qquad (19) \\
&= \frac{rh \cdot rv}{2}\left(\sin(t+\Delta t)\cos(t+\Delta t) - \sin t \cos t - \Delta t\right)
\end{aligned}
$$

and

$$A_a = \frac{(y(t) + y(t + \Delta t)) \cdot (x(t + \Delta t) - x(t))}{2}$$

$$= \frac{(rv \sin t + rv \sin(t + \Delta t)) \cdot (rh \cos(t + \Delta t) - rh \cos t)}{2} \qquad (20)$$

$$= \frac{rh \cdot rv}{2} \left( \begin{array}{l} \sin t \cos(t + \Delta t) - \sin t \cos t + \\ \sin(t + \Delta t)\cos(t + \Delta t) - \sin(t + \Delta t)\cos t \end{array} \right)$$

Then

$$\Delta A = A - A_a$$
$$= \frac{rh \cdot rv}{2} (\sin \Delta t - \Delta t) \qquad (21)$$

The absolute value of $\Delta A$ is

$$|\Delta A| = \frac{rh \cdot rv}{2} (\Delta t - \sin \Delta t)$$

$$= \frac{rh \cdot rv}{2} \left( \Delta t - \left( \Delta t - \frac{\Delta t^3}{3!} + \frac{\Delta t^5}{5!} + \cdots \right) \right)$$

$$\approx \frac{rh \cdot rv}{2} \frac{\Delta t^3}{3!} \qquad (22)$$

$$= \frac{rh \cdot rv}{12} \Delta t^3$$

$$= E \cdot \Delta t^3$$

Finally, if $\Delta A$ is set to a threshold $T$, (5 pixels, for example), then

$$\Delta t = \sqrt[3]{\frac{T}{E}} \qquad (23)$$

After the subdividing step $\Delta t$ is obtained, the number of the subdividing points can be obtained by the following expression:

$$n = \operatorname{int}(1 / \Delta t) + 1 \qquad (24)$$

As the elliptical curve can be obtained by affine transforming a unit circle curve, coordinate information of the subdividing points can be calculated on the unit circle curve. As the number $n$ of the subdividing points has already been obtained and the angle of the circular arc on the unit circle curve corresponding to the elliptical curve is $\theta_1 - \theta_0$ in all, the angle difference between two adjacent subdividing points on the circular arc of the unit circle is $(\theta_1 - \theta_0)/n$. From $\theta_0$ to $\theta_1$, the coordinates of each subdividing point on the circular arc are calculated according to $x = \cos \theta$ and $y = \sin \theta$. Herein, the number of subdividing points on the circular arc of the unit circle is the same as that of the elliptical curve.

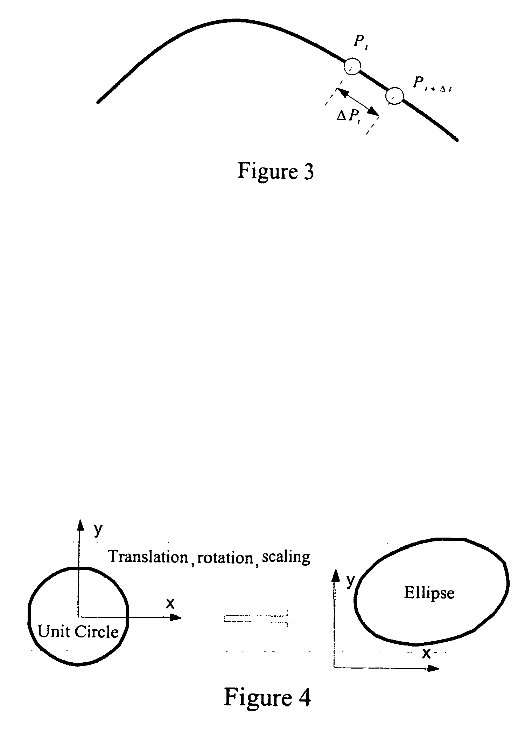

Figure 3 illustrates a conceptual schematic diagram of forward differencing for approximating a Bezier curve. For any point $P_{t+\Delta t}$ on the curve, the coordinate values can be calculated from the coordinate values of the previous

point $P_t$, given the curve length difference $\Delta P_t$, as follows:

$$P_{t+\Delta t} = P_t + \Delta P_t \qquad\qquad (25)$$

If $P_{t+\Delta t}$ is treated as parameter equations, then

$$x(t + \Delta t) = x(t) + \Delta x(t)$$
$$y(t + \Delta t) = y(t) + \Delta y(t) \qquad\qquad (26)$$

If the curve is a quadratic Bezier curve, then

$$\Delta x(t) = 2(X_1 - X_0)\Delta t \cdot t + (X_1 - X_0)\Delta^2 t + 2X_0\Delta t$$
$$\Delta y(t) = 2(Y_1 - Y_0)\Delta t \cdot t + (Y_1 - Y_0)\Delta^2 t + 2Y_0\Delta t \qquad\qquad (27)$$

where $X_0 = x_1 - x_0$, $Y_0 = y_1 - y_0$, $X_1 = x_2 - x_1$, and $Y_1 = y_2 - y_1$.
Similarly,

$$\Delta x(t + \Delta t) = \Delta x(t) + \Delta^2 x(t)$$
$$\Delta y(t + \Delta t) = \Delta y(t) + \Delta^2 y(t) \qquad\qquad (28)$$

So,

$$\Delta^2 x(t) = \Delta(\Delta x(t)) = 2(X_1 - X_0)\Delta^2 t$$
$$\Delta^2 y(t) = \Delta(\Delta y(t)) = 2(Y_1 - Y_0)\Delta^2 t \qquad\qquad (29)$$

If the curve is defined in iterative terms $x_{n+1} = x_n + \Delta x_n$, $\Delta x_n = \Delta x_{n-1} + \Delta^2 x_{n-1}$, and $y_{n+1} = y_n + \Delta y_n$, $y_{n+1} = y_n + \Delta y_n$, then $x_{n+1}$ and $y_{n+1}$ can be obtained in an iterative way.
The coordinate values of the first subdividing point, $\Delta x$ and $\Delta y$ between the second and first subdividing points can be obtained by substituting the value of $t$ on the first subdividing point into the expressions (1) and (27) respectively. Herein, the value of $t$ can be, for example, 0.
If the curve is a cubic Bezier curve, then

$$\Delta x(t) = 3A_x\Delta t \cdot t^2 + 3(A_x\Delta^2 t + 2B_x\Delta t)t + (A_x\Delta^3 t + 3B_x\Delta^2 t + 3C_x\Delta t)$$
$$\Delta y(t) = 3A_y\Delta t \cdot t^2 + 3(A_y\Delta^2 t + 2B_y\Delta t)t + (A_y\Delta^3 t + 3B_y\Delta^2 t + 3C_y\Delta t) \qquad\qquad (30)$$

where $A_x = (X_2 - X_1) - (X_1 - X_0)$, $B_x = (X_1 - X_0)$, $C_x = X_0$, $X_2 = x_3 - x_2$, $A_y = (Y_2 - Y_1) - (Y_1 - Y_0)$, $By = (Y_1 - Y_0)$, $C_y = Y_0$ and $Y_2 = y_3 - y_2$.
Likewise,

$$\Delta^2 x(t) = \Delta(\Delta x(t)) = 6A_x \Delta^2 t \cdot t + 6A_x \Delta^3 t + 6B_x \Delta^2 t$$
$$\Delta^2 y(t) = \Delta(\Delta y(t)) = 6A_y \Delta^2 t \cdot t + 6A_y \Delta^3 t + 6B_y \Delta^2 t$$

( 31 )

and

$$\Delta^3 x(t) = \Delta(\Delta^2 x(t)) = 6A_x \Delta^3 t$$
$$\Delta^3 y(t) = \Delta(\Delta^2 y(t)) = 6A_y \Delta^3 t$$

( 32 )

If the curve is defined in iterative terms $x_{n+1} = x_n + \Delta x_n$, $\Delta x_{n-1} = \Delta x_{n-1} + \Delta^2 x_{n-1}$, $\Delta^2 x_{n-1} = \Delta^2 x_{n-2} + \Delta^3 x_{n-2}$, and $y_{n+1} = y_n + \Delta y_n$, $y_{n+1} = y_n + \Delta y_n$, $\Delta^2 y_{n-1} = \Delta^2 y_{n-2} + \Delta^3 y_{n-2}$, then $x_{n+1}$ and $y_{n+1}$ can be calculated in an iterative way. Likewise, the coordinate values of the first subdividing point, $\Delta x$ and $\Delta y$ between the second and first subdividing points, and $\Delta^2 x$ and $\Delta^2 y$ between the second and first subdividing points can be obtained by substituting the value of $t$ on the first subdividing point into the expressions (3), (30) and (31) respectively. Herein, the value of $t$ on the first subdividing point can be, for example, 0.

Figure 4 illustrates a schematic diagram of the procedure for affine transforming a unit circle, with translation, rotation and scaling, to acquire an ellipse. The unit circle curve can be defined as $(x(\theta), y(\theta), 1)^T = (\cos\theta, \sin\theta, 1)^T$, and the ellipse curve can be obtained by first subdividing the unit circle into points and then affine transforming the subdividing points. According to the coordinates $(\cos\theta, \sin 0, 1)^T$ of the subdividing points on the unit circle arc and the equation (5), the coordinates $(x, y, 1)^T$ of an ellipse curve after affine transformation can be obtained through the following specific calculating formulas:

$$x = rh \cdot \cos(rot) \cdot \cos\theta - rv \cdot \sin(rot) \cdot \sin\theta + x_c$$
$$y = rh \cdot \sin(rot) \cdot \cos\theta + rv \cdot \cos(rot) \cdot \sin\theta + y_c$$

( 33 )

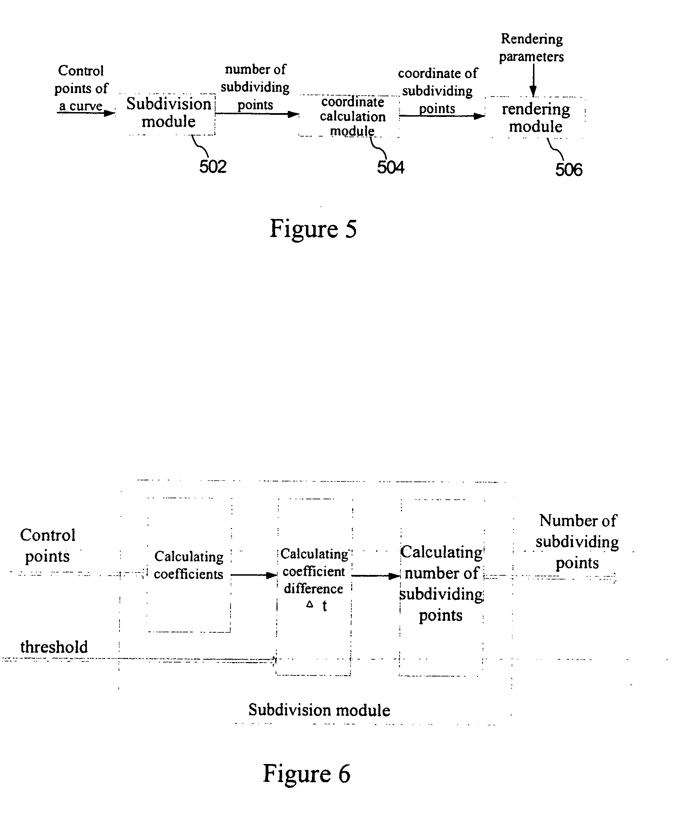

Figure 5 illustrates a block diagram of a graphic-display control apparatus according to an embodiment of the invention. As shown in figure 5, the graphic-display control apparatus comprises a subdivision module (corresponding to the number acquiring unit) 502, a coordinate calculation module (corresponding to the coordinate acquiring unit) 504, and a rendering module (corresponding to the curve rendering unit) 506. A curve and rendering parameters are acquired by the graphic-display control apparatus from outside, and the curve is represented by its control points. Firstly, the subdivision module acquires number information of subdividing points for subdividing a curve by using coordinate information of control points of the curve. Secondly, the coordinate calculation module acquires the coordinate information of each subdividing point according to the number information of the subdividing points and the coordinate information of the control points, by using the method of forward difference when the curve is a Bezier curve or the method of affine transformation when the curve is an ellipse curve. Finally the rendering module connects the subdividing points by straight lines according to the coordinate information of each subdividing point and renders the straight lines connecting respective subdividing points by using the rendering parameters.

Figure 6 illustrates a detailed block diagram of a subdivision module shown in figure 5. As shown in figure 6, the subdividing module calculates coefficients $Q$, $C_{max}$ and $E$ in a curve function according to the coordinate information of the control points of the curve input from outside, acquires the relationship between an area difference and a subdividing step based on the curve function, the area difference being the difference between the area of a curve segment corresponding to the subdividing step on the curve with respect to X coordinate axis and the area of a line segment of two points corresponding to the subdividing step on the curve with respect to X coordinate axis, calculates the subdividing step $\Delta t$ according to the acquired relationship and a threshold input from outside, and calculates the number n of the subdividing points by using the subdividing step $\Delta t$.

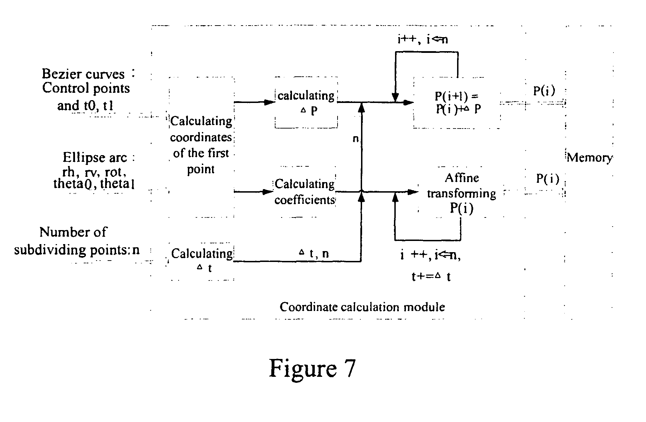

Figure 7 illustrates a detailed block diagram of a coordinate calculation module shown in figure 5. As shown in figure 7, the coordinate calculation module calculates the parameter difference $\Delta t$ according to the number of the subdividing points, and calculates the coordinate information of the first subdividing point according to coordinate information of the control points. Then it calculates a curve difference $\Delta P$ between adjacent subdividing points for the Bezier curve, and calculates affine transformation coefficients for the ellipse curve. By using the difference value $\Delta P$ between adjacent subdividing points, it calculates the coordinate values of the subdividing points of the Bezier curve. By using the affine transformation coefficients, it affine transforms the subdividing points on the unit circle to the subdividing points on the ellipse curve. Finally, the coordinate values of each subdividing point are stored in an external memory for the rendering module.

To sum up, the invention acquires the number information of subdividing points for subdividing a curve by using coordinate information of control points of the curve, and then acquires coordinate information of the subdividing points according to the number information of the subdividing points and the coordinate information of the control points, thereby achieving high efficient curve approximation and further high efficient graphic-display control.

What needs to be noted is that respect modules and/or units shown in figure 5 can be implemented by using pre-programmed firmware or hardware component (for example ASIC) or by using data processing devices including EEPROM or other components.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

Those skilled in the art will understand that there exist more optional embodiments and modifications for implementing the embodiments of this invention, and the abovementioned embodiments and examples are only descriptions of one or more embodiments. Therefore, the scope of this invention is restricted only by the claims attached.

**Claims**

1. A computer method for approximating a curve to be rendered on a display, comprising the steps of:

   acquiring number information of subdividing points for subdividing a curve needed to be approximated based on coordinate information of control points of the curve by:

   acquiring a curve function of the curve based on the coordinate information of the control points;
   acquiring a relationship between an area difference and a subdividing step based on the curve function, wherein the area difference is the difference between the area of a curve segment corresponding to the subdividing step on the curve with respect to X coordinate axis and the area of a line segment of two points corresponding to the subdividing step on the curve with respect to X coordinate axis;
   acquiring a subdividing step corresponding to a set area difference based on the relationship between the area difference and the subdividing step; and
   acquiring the number information of the subdividing points using the subdividing step corresponding to the set area difference;

   acquiring coordinate information of the subdividing points based on the number information of the subdividing points and the coordinate information of the control points; and
   connecting the subdividing points with straight lines based on the coordinate information of the subdividing points.

2. The method for approximating a curve of claim 1, **characterized in that** when the curve is a Bezier curve, the coordinate information of the subdividing points is acquired by forward differencing.

3. The method for approximating a curve of any of the preceding claims, **characterized in that** when the curve is an elliptic curve, the coordinate information of the subdividing points is acquired by affine transforming.

4. The method of any of the preceding method claims used for graphic display control, to render a curve based on coordinate information of control points of the curve; wherein
   connection of the subdividing points with straight lines is followed by drawing of the straight lines connecting the subdividing points according to rendering parameters.

5. The method of claim 4, wherein
   the straight lines are an approximate rendering of a curved character or other symbol or image for display.

6. An apparatus for approximating a curve to be rendered on a display under computer control, comprising:

a number acquiring unit configured to acquire number information of subdividing points for subdividing a curve needed to be approximated based on coordinate information of control points of the curve, the number acquiring unit comprising:

a curve function acquiring unit configured to acquire a curve function of the curve based on the coordinate information of the control points;

a mutual relationship acquiring unit configured to acquire a relationship between an area difference and a subdividing step based on the curve function, wherein the area difference is the difference between the area of a curve segment corresponding to the subdividing step on the curve with respect to X coordinate axis and the area of a line segment of two points corresponding to the subdividing step on the curve with respect to X coordinate axis;

a subdividing step acquiring unit configured to acquire a subdividing step corresponding to a set area difference based on the relationship between the area difference and the subdividing step; and

a number information acquiring unit configured to acquire the number information of the subdividing points using the subdividing step corresponding to the set area difference;

a coordinate acquiring unit configured to acquire coordinate information of the subdividing points based on the number information of the subdividing points and the coordinate information of the control points; and

a curve approximating unit configured to connect the subdividing points with straight lines based on the coordinate information of the subdividing points.

7. The apparatus for approximating a curve of claim 6, **characterized in that** in the case that the curve is a Bezier curve, the coordinate acquiring unit acquires the coordinate information of the subdividing points by forward differencing.

8. The apparatus for approximating a curve of any of claims 6 or 7, **characterized in that** in the case that the curve is an elliptic curve, the coordinate acquiring unit acquires the coordinate information of the subdividing points by affine transforming.

9. A graphic display control apparatus comprising the features of any of the preceding apparatus claims, wherein:

the number acquiring unit is for acquiring number information of subdividing points for subdividing a curve needed to be rendered based on coordinate information of control points of the curve; and wherein

the curve approximating unit is a curve rendering unit configured to connect the subdividing points with straight lines based on the coordinate information of the subdividing points and to draw the straight lines connecting the subdividing points according to rendering parameters.

**Patentansprüche**

1. Computerverfahren zur Approximation einer Kurve, die an einem Display darzustellen ist, mit den Schritten:

Erfassen von Zahleninformationen von Unterteilungspunkten zum Unterteilen einer Kurve, die zur Approximation benötigt werden, auf der Basis von Koordinateninformationen von Kontrollpunkten der Kurve durch:

Erfassen einer Kurvenfunktion der Kurve auf der Basis der Koordinateninformationen der Kontrollpunkte;

Erfassen einer Beziehung zwischen einer Flächendifferenz und einem Unterteilungsschritt auf der Basis der Kurvenfunktion, bei dem die Flächendifferenz die Differenz zwischen der Fläche eines Kurvensegmentes entsprechend dem Unterteilungsschritt auf der Kurve bezüglich der X-Koordinatenachse und der Fläche eines Liniensegmentes zweier Punkte entsprechend dem Unterteilungsschritt auf der Kurve bezüglich der X-Koordinatenachse ist;

Erfassen eines Unterteilungsschrittes entsprechend einer festgelegten Flächendifferenz auf der Basis der Beziehung zwischen der Flächendifferenz und dem Unterteilungsschritt; und

Erfassen der Zahleninformationen der Unterteilungspunkte unter Verwendung des Unterteilungsschrittes entsprechend der festgelegten Flächendifferenz;

Erfassen von Koordinateninformationen der Unterteilungspunkte auf der Basis der Zahleninformationen der Unterteilungspunkte und der Koordinateninformationen der Kontrollpunkte; und

Verbinden der Unterteilungspunkte mit geraden Linien auf der Basis der Koordinateninformationen der Unterteilungspunkte.

2. Verfahren zur Approximation einer Kurve nach Anspruch 1, **dadurch gekennzeichnet, dass** dann, wenn die Kurve eine Bézier-Kurve ist, die Koordinateninformationen der Unterteilungspunkte durch Vorwärtsdifferenzierung erfasst werden.

3. Verfahren zur Approximation einer Kurve nach einem der vorhergehenden Ansprüche, **dadurch gekennzeichnet, dass** dann, wenn die Kurve eine elliptische Kurve ist, die Koordinateninformationen der Unterteilungspunkte durch affine Transformation erfasst werden.

4. Verfahren nach einem der vorhergehenden Verfahrensansprüche, das zur Graphikanzeigesteuerung verwendet wird, um eine Kurve auf der Basis von Koordinateninformationen von Kontrollpunkten der Kurve darzustellen; bei dem dem Verbinden der Unterteilungspunkte mit geraden Linien das Zeichnen der geraden Linien, die die Unterteilungspunkte verbinden, gemäß Darstellungsparametern folgt.

5. Verfahren nach Anspruch 4, bei dem
die geraden Linien eine approximierte Darstellung eines gekurvten Zeichens oder anderen Symbols oder Bildes zur Anzeige sind.

6. Vorrichtung zur Approximation einer Kurve, die an einem Display unter Computersteuerung darzustellen ist, umfassend:

eine Zahlenerfassungseinheit, die konfiguriert ist, um Zahleninformationen von Unterteilungspunkten zum Unterteilen einer Kurve, die zur Approximation benötigt werden, auf der Basis von Koordinateninformationen von Kontrollpunkten der Kurve zu erfassen, welche Zahlenerfassungseinheit umfasst:

eine Kurvenfunktionserfassungseinheit, die konfiguriert ist, um eine Kurvenfunktion der Kurve auf der Basis der Koordinateninformationen der Kontrollpunkte zu erfassen;
eine Gegenseitigkeitsbeziehungserfassungseinheit, die konfiguriert ist, um eine Beziehung zwischen einer Flächendifferenz und einem Unterteilungsschritt auf der Basis der Kurvenfunktion zu erfassen, wobei die Flächendifferenz die Differenz zwischen der Fläche eines Kurvensegmentes entsprechend dem Unterteilungsschritt auf der Kurve bezüglich der X-Koordinatenachse und der Fläche eines Liniensegmentes zweier Punkte entsprechend dem Unterteilungsschritt auf der Kurve bezüglich der X-Koordinatenachse ist;
eine Unterteilungsschritterfassungseinheit, die konfiguriert ist, um einen Unterteilungsschritt entsprechend einer festgelegten Flächendifferenz auf der Basis der Beziehung zwischen der Flächendifferenz und dem Unterteilungsschritt zu erfassen; und
eine Zahleninformationserfassungseinheit, die konfiguriert ist, um die Zahleninformationen der Unterteilungspunkte unter Verwendung des Unterteilungsschrittes entsprechend der festgelegten Flächendifferenz zu erfassen;

eine Koordinatenerfassungseinheit, die konfiguriert ist, um Koordinateninformationen der Unterteilungspunkte auf der Basis der Zahleninformationen der Unterteilungspunkte und der Koordinateninformationen der Kontrollpunkte zu erfassen; und
eine Kurvenapproximationseinheit, die konfiguriert ist, um die Unterteilungspunkte mit geraden Linien auf der Basis der Koordinateninformationen der Unterteilungspunkte zu verbinden.

7. Vorrichtung zur Approximation einer Kurve nach Anspruch 6, **dadurch gekennzeichnet, dass** dann, falls die Kurve eine Bézier-Kurve ist, die Koordinatenerfassungseinheit die Koordinateninformationen der Unterteilungspunkte durch Vorwärtsdifferenzierung erfasst.

8. Vorrichtung zur Approximation einer Kurve nach Anspruch 6 oder 7, **dadurch gekennzeichnet, dass** dann, falls die Kurve eine elliptische Kurve ist, die Koordinatenerfassungseinheit die Koordinateninformationen der Unterteilungspunkte durch affine Transformation erfasst.

9. Graphikanzeigesteuervorrichtung mit den Merkmalen eines der vorhergehenden Vorrichtungsansprüche, bei der:

die Zahlenerfassungseinheit zum Erfassen von Zahleninformationen von Unterteilungspunkten zum Unterteilen einer Kurve, die zum Darstellen benötigt werden, auf der Basis von Koordinateninformationen von Kontrollpunkten der Kurve dient; und bei der

die Kurvenapproximationseinheit eine Kurvendarstellungseinheit ist, die konfiguriert ist, um die Unterteilungspunkte mit geraden Linien auf der Basis der Koordinateninformationen der Unterteilungspunkte zu verbinden und die geraden Linien, die die Unterteilungspunkte verbinden, gemäß Darstellungsparametern zu zeichnen.

## Revendications

1. Procédé informatique d'approximation d'une courbe devant être restituée sur un affichage comportant les étapes consistant à :

acquérir une information de nombre de points de subdivision pour subdiviser une courbe devant être approchée en fonction d'une information de coordonnées des points de contrôle de la courbe par :

acquisition d'une fonction de courbe de la courbe en fonction de l'information de coordonnées des points de contrôle ;
acquisition d'une relation entre une différence de zone et une étape de subdivision en fonction de la fonction de courbe, où la différence de zone est la différence entre la zone d'un segment de courbe correspondant à l'étape de subdivision sur la courbe par rapport à l'axe de coordonnées X et la zone d'un segment de ligne de deux points correspondant à l'étape de subdivision sur la courbe par rapport à l'axe de coordonnées X ;
acquisition d'une étape de subdivision correspondant à une différence de zone déterminée en fonction de la relation entre la différence de zone et l'étape de subdivision ; et
acquisition de l'information de nombre de points de subdivision en utilisant l'étape de subdivision correspondant à la différence de zone déterminée ;

acquérir une information de coordonnées des points de subdivision en fonction de l'information de nombre de points de subdivision et de l'information de coordonnées des points de contrôle ; et
relier les points de subdivision par des lignes droites en fonction de l'information de coordonnées des points de subdivision.

2. Procédé d'approximation d'une courbe selon la revendication 1, **caractérisé en ce que**, lorsque la courbe est une courbe de Bézier, l'information de coordonnées des points de subdivision est acquise par différenciation directe.

3. Procédé d'approximation d'une courbe selon l'une quelconque des revendications précédentes, **caractérisé en ce que**, lorsque la courbe est une courbe elliptique, l'information de coordonnées des points de subdivision est acquise par transformation affine.

4. Procédé selon l'une quelconque des revendications précédentes, utilisé pour un contrôle d'affichage graphique, afin d'effectuer un rendu d'une courbe en fonction d'une information de coordonnées des points de contrôle de la courbe ; dans lequel
une liaison des points de subdivision par des lignes droites est suivie par le dessin des lignes droites reliant les points de subdivision selon les paramètres de rendu.

5. Procédé selon la revendication 4, dans lequel
les lignes droites sont un rendu approximatif d'un caractère courbé ou autre symbole ou image pour un affichage.

6. Appareil d'approximation d'une courbe devant être restituée sur un affichage pendant un contrôle informatique comportant :

une unité d'acquisition de nombre configurée pour acquérir une information de nombre de points de subdivision pour subdiviser une courbe devant être approchée en fonction d'une information de coordonnées des points de contrôle de la courbe, l'unité d'acquisition de nombre comportant :

une unité d'acquisition de fonction de courbe configurée pour acquérir une fonction de courbe de la courbe en fonction de l'information de coordonnées des points de contrôle ;
une unité d'acquisition de relation réciproque configurée pour acquérir une relation entre une différence de zone et une étape de subdivision en fonction de la fonction de courbe, dans laquelle la différence de zone est la différence entre la zone d'un segment de courbe correspondant à l'étape de subdivision sur la courbe par rapport à l'axe de coordonnées X et la zone d'un segment de ligne de deux points correspondant à l'étape de subdivision sur la courbe par rapport à l'axe de coordonnées X ;

une unité d'acquisition d'étape de subdivision configurée pour acquérir une étape de subdivision correspondant à une différence de zone déterminée en fonction de la relation entre la différence de zone et l'étape de subdivision ; et

une unité d'acquisition d'information de nombre configurée pour acquérir l'information de nombre de points de subdivision en utilisant l'étape de subdivision correspondant à la différence de zone déterminée ;

une unité d'acquisition de coordonnées configurée pour acquérir une information de coordonnées des points de subdivision en fonction de l'information de nombre de points de subdivision et de l'information de coordonnées des points de contrôle ; et

une unité d'approximation de courbe configurée pour relier les points de subdivision par des lignes droites en fonction de l'information de coordonnées des points de subdivision.

7. Appareil d'approximation d'une courbe selon la revendication 6, **caractérisé en ce que**, dans le cas où la courbe est une courbe de Bézier, l'unité d'acquisition de coordonnées acquiert l'information de coordonnées des points de subdivision par différenciation directe.

8. Appareil d'approximation d'une courbe selon l'une quelconque des revendications 6 ou 7, **caractérisé en ce que**, dans le cas où la courbe est une courbe elliptique, l'unité d'acquisition de coordonnées acquiert l'information de coordonnées des points de subdivision par transformation affine.

9. Appareil de contrôle d'affichage graphique comportant les caractéristiques selon l'une quelconque des revendications précédentes concernant l'appareil, dans lequel :

l'unité d'acquisition de nombre est conçue pour acquérir une information de nombre de points de subdivision pour subdiviser une courbe devant être rendue en fonction d'une information de coordonnées des points de contrôle de la courbe ; et dans lequel

l'unité d'approximation de courbe est une unité de rendu de courbe configurée pour relier les points de subdivision par des lignes droites en fonction de l'information de coordonnées des points de subdivision et pour dessiner les lignes droites reliant les points de subdivision selon les paramètres de rendu.

Figure 1

Figure 2

Figure 3

Figure 4

Rendering
parameters

Control
points of
a curve → Subdivision
module → number of
subdividing
points → coordinate
calculation
module → coordinate of
subdividing
points → rendering
module

502        504        506

## Figure 5

Control
points → Calculating
coefficients → Calculating
coefficient
difference
Δ t → Calculating
number of
subdividing
points → Number of
subdividing
points

threshold

Subdivision module

## Figure 6

Figure 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0577131 A2
- US 6069554 A
- US 5408598 A